# EUROPÄISCHE PATENTSCHRIFT

(11) **EP 4 359 163 B1**
(45) Veröffentlichungstag und Bekanntmachung des Hinweises auf die Patenterteilung: **29.07.2026**
(21) Anmeldenummer: 22736213.4
(22) Anmeldetag: 21.06.2022
(51) Int. Cl.: B23K 26/03, B23K 26/067, B23K 26/082, B23K 26/20, B23K 26/242, B23K 26/244, B23K 26/28, B23K 26/32, H01M 50/169, B23K 101/04, B23K 101/36, B23K 103/10

(54) **VERFAHREN ZUM MEDIENDICHTEN VERSCHWEISSEN VON ALUMINIUMHALTIGEN BAUTEILEN**
METHOD FOR WELDING ALUMINUM-CONTAINING COMPONENTS IN A MEDIA-TIGHT MANNER
PROCÉDÉ DE SOUDAGE ÉTANCHE AUX MILIEUX D'ÉLÉMENTS CONTENANT DE L'ALUMINIUM

(30) Priorität: 23.06.2021 DE 102021206486
(43) Veröffentlichungstag der Anmeldung: 01.05.2024
(73) Patentinhaber: TRUMPF Laser- und Systemtechnik SE, 71254 Ditzingen (DE)
(72) Erfinder: SCHEIBLE, Philipp, 71254 Ditzingen (DE); HAUG, Patrick, 70839 Gerlingen (DE); WILDERMUTH, Jan, 71723 Großbottwar (DE)
(74) Vertreter: Trumpf Patentabteilung
(86) Internationale Anmeldenummer: PCT/EP2022/066905
(87) Internationale Veröffentlichungsnummer: WO 2022/268824

(56) Entgegenhaltungen:
- WO-A2-03/079464
- DE-A1- 102016 124 924
- DE-A1- 102019 210 019
- JP-A- 2000 021 365
- US-A1- 2016 361 782

## Beschreibung

Die Erfindung betrifft ein Verfahren zum Verschweißen von wenigstens zwei aluminiumhaltigen Bauteilen,
wobei die Bauteile jeweils einen Gehalt von wenigstens 75 Gew% Aluminium, bevorzugt wenigstens 90 Gew% Aluminium, aufweisen,
wobei das Verschweißen als Laserschweißen im Tiefschweißregime erfolgt,
wobei ein Ausgangslaserstrahl auf mehrere Teilstrahlen aufgeteilt wird, die auf die Bauteile gerichtet werden, so dass an einer Oberfläche der Bauteile mehrere Laserspots erzeugt werden,
wobei die mehreren Laserspots an der Oberfläche der Bauteile eine Schweißkontur abfahren,
und wobei Laserspot-Zentren von wenigstens drei Laserspots der mehreren Laserspots in einer Ringformation angeordnet sind.

In der Elektromobilität müssen für zahlreiche Anwendungsfälle Bauteile gefügt werden, welche gegenüber verschiedenen Medien dicht ausgebildet sind. Typische Medien, gegenüber denen eine Mediendichtigkeit hergestellt werden muss, sind beispielsweise Kühlflüssigkeiten oder auch Schutzgase, um eine geeignete Atmosphäre für empfindliche Komponenten zu schaffen.

In der Elektromobilität sind, insbesondere aufgrund des geringen spezifischen Gewichts, Bauteile basierend auf Aluminiumwerkstoffen von großer Bedeutung. Um aluminiumhaltige Bauteile mediendicht zu fügen, wird bislang vorwiegend Löten eingesetzt. Beim Löten muss zum Erzeugen der Lötverbindung ein Lot zugeführt werden. Das Löten ist vergleichsweise aufwändig und schwierig; zudem können Lötverbindungen korrosionsanfällig sein. Weiterhin ist es möglich, aluminiumhaltige Bauteile miteinander zu verkleben, um diese mediendicht zu fügen. Auch das Kleben ist vergleichsweise aufwändig und erfordert oft lange Aushärtungsprozesse, und die Klebestelle kann gegenüber hohen Temperaturen empfindlich sein.

Schweißen ist ein Fügeverfahren, mit dem zwei Werkstücke dauerhaft miteinander verbunden werden können. Laserschweißen wird meist eingesetzt, wenn mit hoher Schweißgeschwindigkeit, schmaler und schlanker Schweißnahtform und mit geringem thermischem Verzug geschweißt werden soll. Beim Laserschweißen erfolgt die Energiezufuhr über einen Laserstrahl. Zur Erzielung einer hohen Schweißgeschwindigkeit erfolgt das Laserschweißen bevorzugt im Tiefschweißregime, wobei sich eine Dampfkapillare (Keyhole) im Bauteilmaterial ausbildet. Das Laserschweißen von mediendichten Schweißnähten bei aluminiumhaltigen Bauteilen ist jedoch schwierig. Aluminiumhaltige Werkstücke neigen beim Laserschweißen zu starken Turbulenzen des Schmelzbades. Diese Turbulenzen führen zu einer ungleichmäßigen Erstarrung der Schweißnaht. Als Folge kann es zu Nahteinfällen, Randkerben oder Löchern bei der Schweißnaht kommen. Durch die zuvor genannten Probleme in Kombination mit Rissen und Poren an der Schweißnaht können Undichtigkeiten an der Schweißnaht entstehen, so dass die verschweißten Bauteile für Anwendungen, bei denen es auf Mediendichtheit ankommt, nicht geeignet sind. Außerdem kommt es durch die starken Turbulenzen des Schmelzbades beim Laserschweißen oft zu starker Bildung von Schweißspritzern, die die Umgebung verunreinigen und zu Materialverlust an der Schweißnaht führen.

Aus der DE 10 2010 003 750 A1 ist es bekannt, die Strahlprofilcharakteristik eines Laserstrahls mittels einer Mehrfachclad-Faser zu verändern. Hierbei kann ein Laserstrahl mit einem Kernanteil und einem Ringanteil erzeugt werden.

Aus der DE 10 2016 124 924 A1 (offenbarend den Oberbegriff des Anspruchs 1) ist eine Laserschweißvorrichtung bekannt geworden, die zum Verschweißen einer Dichtungsplatte auf einem Gehäusekörper einer Batterie eingesetzt werden kann, wobei der Gehäusekörper und die Dichtungsplatte aus Aluminium gefertigt sind. Ein kollimierter Laserstrahl wird über eine Umformeinrichtung geleitet, die ein diffraktives optisches Element (DOE) mit einer Öffnung umfasst. Mit dem DOE kann ein einfallender Laserstrahl auf mehrere Teilstrahlen aufgeteilt werden, beispielsweise auf vier Teilstrahlen, die gemäß den Ecken eines Quadrats angeordnet sind. Je nach Überlapp des kollimierten Laserstrahls mit dem DOE oder seiner Öffnung wird ein Teil des kollimierten Laserstrahls mit dem DOE auf die Teilstrahlen aufgeteilt, oder bleibt beim Passieren der Öffnung unverformt.

Aus der DE 10 2019 210019 A1 ist eine Apparatur zum Laserschweißen eines Werkstücks bekannt geworden.

Die JP2000021365A und US 2016/361782 A1 offenbaren jeweils Herstellungsverfahren für eine dichtgeschweißte Batterie, bei denen ein Batteriedeckel und eine Batterie mittels Laserstrahlung miteinander verschweißt werden.

### Aufgabe der Erfindung

Es ist Aufgabe der Erfindung, ein Verfahren zum Verschweißen von zwei aluminiumhaltigen Bauteilen bereitzustellen, mit dem mit hoher Zuverlässigkeit mediendichte Schweißnähte gefertigt werden können.

### Kurze Beschreibung der Erfindung

Diese Aufgabe wird erfindungsgemäß gelöst durch ein Verfahren der eingangs genannten Art, das dadurch gekennzeichnet ist, dass der Ausgangslaserstrahl mittels einer Multifaser, bevorzugt einer 2-in-1-Faser, erzeugt wird, so dass die mehreren Laserspots an der Oberfläche der Bauteile jeweils einen Kernanteil und einen Ringanteil aufweisen, wobei eine mittlere Leistungsdichte im Kernanteil höher ist als eine mittlere Leistungsdichte im Ringanteil, und wobei sich eine gemeinsame Dampfkapillare aller Laserspots in den Bauteilen ausbildet, die von einem gemeinsamen Schmelzbad umgeben ist.

Die Erfindung schlägt vor, zum Verschweißen von aluminiumhaltigen Bauteilen einen Ausgangslaserstrahl auf mehrere Teilstrahlen und entsprechend mehrere Laserspots auf der Werkstückoberfläche aufzuteilen. Zumindest ein Teil der Laserspots (meist alle Laserspots oder alle Laserspots bis auf einen Laserspot) sind an der Werkstückoberfläche in einer Ringformation angeordnet. Zudem ist eine Strahlformung des Ausgangslaserstrahls mit einer Multifaser, bevorzugt einer 2-in-1-Faser, vorgesehen, durch die im Ausgangslaserstrahl und in den Teilstrahlen, und damit in den einzelnen Laserspots, jeweils eine Aufteilung der Laserleistung auf einen Kernanteil mit höherer Leistungsdichte und einen Ringanteil mit niedrigerer Leistungsdichte erfolgt (im Falle der 2-in-1-Faser als "2-in-1-Technik" bezeichnet). Die Multifaser umfasst eine zentrale Kernfaser und eine oder mehrere Ringfasern, die die Kernfaser ringförmig umgeben. Aus der Kernfaser resultiert der Kernanteil, und aus der einen oder den mehreren Ringfasern resultiert der Ringanteil (im Falle mehrerer Ringfasern umfasst der Ringanteil dabei mehrere Einzelringanteile, die insgesamt dann den Ringanteil bilden). Durch die Gesamtheit dieser Maßnahmen ist es erfindungsgemäß möglich, ein qualitativ hochwertiges Laserschweißen von aluminiumhaltigen Bauteilen zu erreichen, und insbesondere eine porenarme und mediendichte Schweißnaht zu erhalten.

Bei Verwendung eines einzelnen Laserspots (Single Spot) führt bei aluminiumhaltigen Bauteilen die 2-in-1-Technik zwar zu einer gewissen Reduktion der Spritzerbildung im Vergleich zur Single-Spot-Technik mit herkömmlichem (unverformtem) Laserstrahl, aber die verbleibenden Instabilitäten in den aluminiumhaltigen Bauteilen bewirken nach wie vor, dass die erhaltene Schweißnaht in der Regel nicht mediendicht ist. Es kommt aufgrund der spezifischen Eigenschaften des Aluminiums im Bauteilmaterial weiterhin zu starken Turbulenzen beim Schweißen im Schmelzbad. Möglicherweise ist das Keyhole bei einem einzigen Strahl im Vergleich zum erzeugten Schmelzbad zu klein. Es entstehen insbesondere viele Poren, die dann die Schweißnaht mediendurchlässig machen.

Überraschenderweise konnten jedoch bei Verwendung einer Multifaser bzw. der 2-in-1-Technik mit mehreren Laserspots in Ringanordnung besonders stabile Keyholes beim Laserschweißen von aluminiumhaltigen Bauteilen erhalten werden. Es können im Rahmen der Erfindung größere Keyholes (im Vergleich zu einzelnen Keyholes bei einzelnen Laserspots) erreicht werden; diese sind stabiler und kollabieren nicht. Stattdessen kann die Schmelze durch die größeren Keyholes zuverlässiger verdrängt werden. Eine homogene Erstarrung der Schweißnaht kann erreicht werden.

Die Laserspot-Zentren der jeweils (in der Ringformation aufeinanderfolgenden/benachbarten) Laserspots der Ringformation können gedanklich entsprechend einem Polygon miteinander verbunden werden, in welchem eine Innenfläche (Polygonfläche) eingeschlossen ist. Im Bereich dieser Polygonfläche kann das erfindungsgemäße Tiefschweißen in den aluminiumhaltigen Bauteilen im Wesentlichen stattfinden.

Das Laserschweißen gemäß der Erfindung erzeugt ein besonders großes Schmelzevolumen, insbesondere auch vorauslaufend zu einer Dampfkapillare (Keyhole); insbesondere können die (bzgl. der Ringformation) nach außen gelegenen Teilbereiche der Ringanteile das Schmelzevolumen erhöhen. Die Laserspots können dabei eine gemeinsame Schmelze ausbilden. Das vorauslaufende, besonders große Schmelzevolumen kann die Dynamik der Schmelze und dadurch Turbulenzen reduzieren.

Im Rahmen der Erfindung können zudem besonders große Keyholes eingerichtet werden und die Keyhole-Geometrie ändert sich (im Vergleich zu einem Keyhole im Falle von Single-Spot), und das Absorptionsverhalten der Laserstrahlung ändert sich entsprechend. Erfindungsgemäß wird ein gemeinsames Keyhole durch alle Laserspots bzw. Teilstrahlen zusammen ausgebildet. Die Schmelze kann dann beim Fortschreiten des Schweißprozesses um die Dampfkapillare herum fließen. Insgesamt kann eine besonders hohe Keyhole-Stabilität erreicht werden. Es sind hohe Schweißgeschwindigkeiten bei guter Nahtqualität möglich, und insbesondere können problemlos mediendichte Schweißnähte der aluminiumhaltigen Schweißnähte erzeugt werden, insbesondere im Überlappstoß.

Mit vier oder mehr Laserspots in der Ringformation ist (bei symmetrischer Anordnung der Laserspots) der Schweißprozess bereits weitgehend richtungsunabhängig. Zudem kann die Ringformation ein gemeinsames Keyhole der aluminiumhaltigen Bauteile sehr gut stabilisieren. Die Gesamtheit der Laserspots auf der Werkstückoberfläche) wird hier als das Schweißbild bezeichnet.

Die Erzeugung der Teilstrahlen erfolgt typischerweise dadurch, dass der Ausgangslaserstrahl zwischen einer Kollimationsoptik und einer Fokussieroptik über ein oder mehrere optische Elemente geleitet wird, die zumindest in einen Teil des Strahlquerschnitts des Ausgangslaserstrahls einragen. Typische optische Elemente zu diesem Zweck sind Keilplatten; es können aber auch andere diffraktive und refraktive optische Elemente eingesetzt werden. In einer bevorzugten Variante werden zwei Bifokaleinsätze eingesetzt, die in einem Winkel von 90° zueinander angeordnet sind. Ebenso ist es möglich, als optisches Element eine Facettenplatte einzusetzen, die entsprechend der gewünschten Anzahl von Laserspots der Ringformation über ringförmig angeordnete Facetten (Außenfacetten) verfügt, die gegenüber einer Grundebene, die quer zur Strahlausbreitungsrichtung verläuft, um einen Winkel β abgewinkelt (angeschrägt) sind, typischerweise mit 0<β≤0,50°, oft β≤0,25°. Die Außenfacetten sind typischerweise zueinander um 360°/N, mit N: Anzahl der Laserspots in der Ringformation, gegeneinander um eine zentrale Achse (optische Achse der Facettenplatte, entsprechend der Strahlausbreitungsrichtung) rotiert. Falls auch ein zentraler Laserspot erwünscht ist, kann eine weitere Facette (Zentralfacette) vorgesehen sein, die parallel zur Grundebene liegt, wobei die Außenfacetten nach radial innen an die Zentralfacette angrenzen. Die Zentralfacette ist typischerweise als regelmäßiges Polygon ausgebildet. Falls kein zentraler Laserspot erwünscht ist, können die Außenfacetten radial innen einfach in einem gemeinsamen Zentralpunkt zusammenstoßen. Mit einer Facettenplatte kann eine grundsätzlich beliebige Anzahl von Laserspots erzeugt werden, entsprechend der Ausbildung der Facettenplatte.

Die Laserspots weisen typischerweise eine gleiche Größe auf. Typischerweise entfällt auf die Laserspots der Ringformation jeweils eine gleiche Laserleistung. Die Laserspots der Ringformation besitzen typischerweise bezüglich ihrer Laserspot-Zentren einen gleichen Abstand (Radius) zu einem gemeinsamen Zentrum (Schwerpunkt) der Gesamtheit der Laserspots.

Die Leistungsanteile von Kernanteil und Ringanteil bei einem jeweiligen Laserspot können über den Anteil des Ausgangslaserstrahls, der jeweils in die Kernfaser und die eine oder die mehreren Ringfasern der Multifaser eingeleitet werden, eingestellt werden. Meist ist die mittlere Leistungsdichte im Kernanteil wenigstens 2-mal, oft wenigstens 4-mal, so hoch wie im Ringanteil. Die (äußeren) Grenzen von Kernanteil und Ringanteil können bestimmt werden als der Ort, an dem die lokale Leistungsdichte geringer ist als die Hälfte der mittleren Leistungsdichte im Kernanteil oder Ringanteil, im Falle mehrerer Ringfasern im äußersten Einzelringanteil; bei näherungsweise einheitlicher Leistungsdichte innerhalb des Kernanteils und Ringanteils, bei mehreren Ringfasern des äußersten Einzelringanteils, entspricht dies einem FWHM-Kriterium. Die Durchmesser bzw. deren Verhältnisse der Kernfaser und der (äußersten) Ringfaser am abgebildeten Faserende bestimmen die Durchmesser bzw. deren Verhältnisse von Kernanteil und Ringanteil in einem jeweiligen Laserspot. Das Abbildungsverhältnis und damit die absolute Größe der Laserspots kann über die Kollimieroptik und die Fokussieroptik gewählt bzw. eingestellt werden.

Die Schweißkontur wird von den Laserspots kontinuierlich entlang ihres Verlaufs (ohne Wobbeln) abgefahren, typischerweise mit einer konstanten Vorschubgeschwindigkeit. Dadurch entsteht die (mediendichte) Schweißnaht. Man beachte, dass sich beim Abfahren der Schweißkontur die lokale Vorschubrichtung (Schweißrichtung) ändern kann, und dadurch auch die Orientierung des Schweißbildes zur lokalen Vorschubrichtung. Durch die erfindungsgemäße, zumindest weitgehende Richtungsunabhängigkeit des Schweißbildes sind solche Änderungen der lokalen Vorschubrichtung beim erfindungsgemäßen Verschweißen der Bauteile weitgehend unkritisch.

Die zwei zu schweißenden aluminiumhaltigen Bauteile können beispielsweise im Überlappstoß oder im Stumpfstoß angeordnet sein. Das Laserschweißen ist entsprechend der Erfindung als Einschweißen betrieben.

Bevorzugt erfolgt das Verschweißen der aluminiumhaltigen Bauteile als Einschweißen im Überlappstoß oder Stumpfstoß, und besonders bevorzugt als Einschweißen im Überlappstoß. Man beachte, dass der Begriff der Bauteile, die im Rahmen der vorliegenden Erfindung miteinander verschweißt werden, lokal bezüglich des Laserschweißvorgangs zu verstehen ist; entsprechend können die zu verschweißenden Bauteile vor dem Laserschweißen separat sein, oder bereits unabhängig von der zu schweißenden Verbindung miteinander verbunden sein.

### Bevorzugte Varianten der Erfindung

Entsprechend dem erfindungsgemäßen Verfahren zum Verschweißen von aluminiumhaltigen Bauteilen, die vorsieht, dass die wenigstens zwei Bauteile miteinander verschweißt werden durch eine Einschweißung, und dass das Laserschweißen erfolgt
- als Einschweißen im Überlappstoß, insbesondere wobei das Einschweißen in wenigstens 10% einer Bauteildicke eines untersten Bauteils des Überlappstoßes erfolgt, oder
- als Einschweißen im Stumpfstoß. Das Verschweißen von aluminiumhaltigen Bauteilen durch eine Einschweißung hat sich in der Praxis für die Fertigung von mediendichten Schweißnähten besonders bewährt.

Ebenso bevorzugt ist eine Variante des erfindungsgemäßen Verfahrens zum Verschweißen von aluminiumhaltigen Bauteilen, die vorsieht, dass die wenigstens zwei Bauteile im Überlappstoß miteinander verschweißt werden,
und dass das Laserschweißen erfolgt
- als Einschweißen, wobei das Einschweißen in wenigstens 10% einer Bauteildicke des untersten Bauteils des Überlappstoßes erfolgt. Das Verschweißen im Überlappstoß hat sich in der Praxis für die Fertigung von mediendichten Schweißnähten besonders bewährt, vor allem wenn dies als Einschweißen erfolgt. Durch das Einschweißen kann durch das Belassen von festem Material des untersten Bauteils eine zuverlässige Abdichtung eingerichtet werden.

Erfindungsgemäß bildet sich eine gemeinsame Dampfkapillare aller Laserspots in den Bauteilen aus, die von einem gemeinsamen Schmelzbad umgeben ist. Die gemeinsame Dampfkapillare ist ein zusammenhängender Raum in den zu verschweißenden Bauteilen, in welchem sich Metalldampf befindet, und der von flüssiger Schmelze umgeben ist; die Dampfkapillaren der einzelnen Laserspots (wenn sie isoliert verwendet würden) vereinigen sich zu diesem zusammenhängendem Raum. Die gemeinsame Dampfkapillare (gemeinsames Keyhole) kann durch eine geeignete Verfahrensführung, insbesondere einen nicht zu großen Abstand der Laserspots der Ringformation, eingerichtet werden. Das gemeinsame Keyhole ist deutlich größer als ein Keyhole, das mit einem einzelnen Laserstrahl (Single Spot) erzeugt werden könnte. Das größere und geometrisch dann auch anders geformte Keyhole beeinflusst das Absorptionsverhalten der eingestrahlten Laserstrahlung. Mehrere Intensitätsspitzen, entsprechend den mehreren Laserspots der Ringformation, sind entsprechend der Ringformation am gemeinsamen Keyhole ringförmig verteilt angeordnet; hinzu kann weiterhin eine Intensitätsspitze eines weiteren Laserspots in der Mitte der Ringformation kommen. Ein Keyhole ist am Ort einer lokalen Intensitätsspitzen besonders stabil; durch die mehreren Intensitätsspitzen am gemeinsamen Keyhole wird eine Stabilisierung des gemeinsamen, großen Keyhole insgesamt erreicht. Im Gegensatz dazu kann bei einem Single-Spot Keyhole nur der Bereich einer einzigen Intensitätsspitze stabilisiert werden. Die gemeinsame Dampfkapillare ragt (im Falle eines Überlappstoßes) bevorzugt so tief ein, dass auch an einer Grenzfläche zwischen den überlappenden, zu verschweißenden Bauteilen der Querschnitt der gemeinsamen Dampfkapillare eine zusammenhängende Fläche bildet. Weiterhin ragt (im Allgemeinen) die gemeinsame Dampfkapillare bevorzugt so tief ein, dass die gemeinsame Dampfkapillare auf Höhe der Hälfte der maximalen Tiefe aller Teilstücke der gemeinsamen Dampfkapillare die gemeinsame Dampfkapillare im Querschnitt eine zusammenhänge Fläche bildet. Der Querschnitt wird hier senkrecht zur Strahlausbreitungsrichtung angenommen.

Bevorzugt ist eine Variante, bei der die mehreren Laserspots eine Anordnung bilden, die eine Rotationssymmetrie mit einer Zähligkeit entsprechend der Anzahl der Laserspots der Ringformation hat. Durch die Rotationssymmetrie wird eine hohe Richtungsunabhängigkeit des Laserschweißens erreicht, d.h. die relative Orientierung der Gesamtheit der Laserspots zur momentanen Vorschubrichtung spielt keine oder nur eine sehr geringe Rolle für den Schweißprozess.

In einer Variante ist vorgesehen, dass alle Laserspots die Ringformation ausbilden. Dies ist besonders einfach einzurichten, beispielsweise mit zwei Bifokaleinsätzen im Falle von vier Laserspots in der Ringformation. Insbesondere ist hier kein Laserspot in der Mitte der Ringformation vorgesehen. Im Falle von wenigen Laserspots in der Ringformation (zum Beispiel bei 3-5 Laserspots in der Ringformation) kann in der Regel auf diese Weise ein gut stabilisiertes, gemeinsames Keyhole eingerichtet werden.

In einer alternativen Variante ist ein Laserspot-Zentrum eines Laserspot in der Mitte der Ringformation angeordnet. Mit anderen Worten, die Laserspots der Ringformation werden durch einen weiteren Laserspot ergänzt, der in der Mitte der Ringformation angeordnet ist. Dadurch kann ein gemeinsames Keyhole zusätzlich stabilisiert werden, insbesondere im Falle von vielen Laserspots in der Ringformation (zum Beispiel bei 4 oder mehr, bevorzugt bei 6 oder mehr Laserspots in der Ringformation); bei vielen Laserspots in der Ringformation wird zumeist auch ein größerer Radius der Laserspot-Zentren der Laserspots der Ringformation gegenüber einem gemeinsamen Zentrum der Laserspots gewählt, um Überlappungen der Ringanteile der Laserspots zu reduzieren. Dann kann der mittlere Laserspot den Zentralbereich des gemeinsamen Keyholes stabilisieren und einem lokalen Rücksprung im Keyhole im Zentralbereich vorbeugen.

Besonders bevorzugt ist eine Variante, bei der die Ringformation von genau vier Laserspots gebildet wird. Dadurch lässt sich bereits eine sehr weitgehende Richtungsunabhängigkeit auf einfache Weise erwirken. Die genau vier Laserspots der Ringformation sind bevorzugt quadratisch angeordnet.

In einer Weiterentwicklung dieser Variante verläuft die Schweißkontur so, dass während des Laserschweißens zumindest überwiegend bezüglich der lokalen Vorschubrichtung
- ein Laserspot der Ringformation vorausläuft,
- zwei Laserspots der Ringformation mittig mit gleicher Position bezüglich der lokalen Vorschubrichtung angeordnet sind,
- und ein Laserspot der Ringformation nachläuft. Mit dieser überwiegend angewandten Orientierung des Schweißbildes (auch "Trapez"-Anordnung genannt) kann eine vergleichsweise breite Schweißnaht mit vier Laserspots in der Ringformation eingerichtet werden, und ein besonders großes und stabiles Schmelzbad erhalten werden.

Bevorzugt ist eine alternative Weiterentwicklung, bei der die Schweißkontur so verläuft, dass während des Laserschweißens zumindest überwiegend bezüglich der lokalen Vorschubrichtung
- zwei Laserspots der Ringformation mit gleicher Position bezüglich der lokalen Vorschubrichtung vorauslaufen,
- und zwei Laserspots der Ringformation mit gleicher Position bezüglich der lokalen Vorschubrichtung nachlaufen. Mit dieser überwiegend angewandten Orientierung des Schweißbildes (auch "Quadrat"-Anordnung genannt) kann eine vergleichsweise schmale Schweißnaht mit vier Laserspots in der Ringformation eingerichtet werden, und dadurch ein besonders tief reichendes Aufschmelzen bei hoher Schweißgeschwindigkeit und stabilem Schmelzbad erreicht werden. Die überwiegende lokale Schweißrichtung/Vorschubrichtung kann einer der Koordinatenhauptachsen der verwendeten Laserschweißvorrichtung entsprechen. Man beachte, dass in Kurvenfahrten die Orientierung des Schweißbilds wechselt, z.B. von der Quadrat-Anordnung in die Trapez-Anordnung und wieder zurück in die Quadratanordnung beim Durchfahren einer 90°-Kurve.

In einer weiteren Variante wird die Ringformation von genau fünf Laserspots gebildet,
insbesondere wobei die Schweißkontur so verläuft, dass während des Laserschweißens zumindest überwiegend bezüglich der lokalen Vorschubrichtung
- ein Laserspot der Ringformation vorausläuft,
- zwei Laserspots der Ringformation mittig mit gleicher Position bezüglich der lokalen Vorschubrichtung angeordnet sind,
- und zwei Laserspots der Ringformation mit gleicher Position bezüglich der lokalen Vorschubrichtung nachlaufen. Diese Variante erreicht eine noch bessere Richtungsunabhängigkeit. Mit dem einen vorauslaufenden, den zwei mittigen und den zwei nachlaufenden Laserspots in der bevorzugt überwiegend angewandten Orientierung des Schweißbildes gegenüber der Vorschubrichtung wird ein besonders ruhiges Schmelzbad erreicht.

In einer weiteren Variante wird die Ringformation von genau sechs Laserspots gebildet. Zusätzlich kann ein weiterer Laserspot mittig in der Ringformation vorgesehen sein. Damit kann eine noch weitergehende Richtungsunabhängigkeit erreicht werden. Man beachte, dass eine Anzahl von 3 bis 6 Laserspots in der Ringformation im Rahmen der Erfindung bevorzugt ist; eine noch größere Anzahl bringt in der Regel nur noch geringe Verbesserungen bezüglich Richtungsunabhängigkeit oder Schmelzbadstabilität.

Besonders bevorzugt ist eine Variante, bei der die Ringanteile von in der Ringformation benachbarten Laserspots einander berührend angeordnet sind. Dadurch kann ein sehr stabiles, gemeinsames Keyhole beim Laserschweißen der aluminiumhaltigen Bauteile erreicht werden. Die Ringanteile benachbarter Laserspots der Ringformation werden als einander berührend angesehen, wenn diese Laserspots einen Abstand ihrer Laserspot-Zentren entsprechend der Summe ihrer jeweiligen halben Durchmesser ihrer Ringanteile aufweisen, mit einer Toleranz von +/- 10% bezogen auf diese Summe.

Bei einer alternativen Variante sind die Ringanteile von in der Ringformation benachbarten Laserspots einander überlappend angeordnet,
insbesondere wobei die Kernanteile von Laserspots der Ringformation nicht mit den Ringanteilen von in der Ringformation benachbarten Laserspots überlappen. Durch die Überlappung der Ringanteile der Laserspots, insbesondere ohne Überlappung von Ringanteilen und Kernanteilen, können oftmals lokale Vorsprünge und Rücksprünge eines gemeinsamen Keyholes bezüglich der Tiefe in die zu verschweißenden Bauteile hinein verringert werden.

Bevorzugt ist eine Weiterentwicklung dieser Variante, bei der in jedem Ort maximal zwei Ringanteile von Laserspots der Ringformation miteinander überlappen. Dies hat sich für ein besonders stabiles Schmelzbad bei den aluminiumhaltigen Bauteilen bewährt.

Bevorzugt ist auch eine Weiterentwicklung, bei der die Laserspots der Ringformation ein gemeinsames Zentrum umfassen, an welchem sich die Ringanteile der Laserspots der Ringformation einander berühren,
insbesondere wobei genau vier Laserspots in der Ringformation angeordnet sind. In dieser Variante, die typischerweise ohne einen Laserspot in der Mitte der Ringformation eingerichtet wird, kann ein ruhiges und großes Keyhole mit nur geringen lokalen Vorsprüngen und Rücksprüngen in die Tiefe der zu verschweißenden Bauteile eingerichtet werden.

Vorteilhaft ist auch eine Variante, bei der in einem Zentralbereich die Ringanteile aller Laserspots der Ringformation einander überlappen. Insbesondere im Falle von nur wenigen Laserspots kann durch die Überlappung der Ringanteile der Laserspots der Ringanordnung in dem Zentralbereich eine Hilfs-Intensitätsspitze erzeugt werden, die ein gemeinsames Keyhole zusätzlich zu den Intensitätsspitzen der Kernanteile der Laserspots stabilisieren kann.

In einer bevorzugten Variante ist vorgesehen,
dass für einen Durchmesser DK des Kernanteils und einen Durchmesser DR des Ringanteils gilt: 2≤DR/DK≤10, bevorzugt 2,5≤DR/DK≤6, besonders bevorzugt 3,5≤DR/DK≤5,
und dass für einen Leistungsanteil LK des Kernanteils im Verhältnis zur Gesamtleistung in einem jeweiligen Laserspot gilt: 10%≤LK≤90%, bevorzugt 30%≤LK≤70%, besonders bevorzugt 40%≤LK≤60%. Diese Parameterbereiche haben sich für die Erfindung in der Praxis bei aluminiumhaltigen Bauteilen zur Erzielung eines stabilen Keyholes und mediendichter Schweißnähte bewährt.

Bevorzugt ist weiterhin eine Variante, die vorsieht, dass
- die Bauteile eine Bauteildicke BD mit 0,5mm≤BD≤5,0 mm aufweisen, und/oder
- die Bauteile aus Aluminiumwerkstoffen der 3000er, 5000er oder 6000er-Klasse gefertigt sind, und/oder
- die Kernanteile der Laserspots einen Durchmesser DK aufweisen mit 11µm≤DK≤200µm, bevorzugt 50µm≤DK≤150µm, wobei auch Durchmesser DK bis 400µm denkbar sind, und die Ringanteile der Laserspots einen Durchmesser DR aufweisen mit 50µm≤DR≤700µm, bevorzugt 200µm≤DR≤550µm, wobei auch Durchmesser DR bis 1500µm denkbar sind, und/oder
- eine mittlere Laserleistung P des Ausgangslaserstrahl angewandt wird mit P≥2kW, bevorzugt P≥4kW, und/oder
- eine Schweißgeschwindigkeit SG angewandt wird mit SG≥5m/min, bevorzugt SG≥10m/min. Auch diese Parameter haben sich in der Praxis zum Laserschweißen der aluminiumhaltigen Bauteile bewährt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert.
- Fig. 1a: zeigt in einer schematischen Seitenansicht eine beispielhafte Schweißoptik, mit welcher das erfindungsgemäße Verfahren durchgeführt werden kann;
- Fig. 1b: zeigt die beispielhafte Schweißoptik aus Fig. 1a um 90° gedreht;
- Fig. 1c: zeigt eine schematische Darstellung einer beispielhaften 2-in-1-Faser für die Erfindung im Querschnitt, wie sie als Laserlichtkabel in Fig. 1a verwendet werden kann und mit der ein Ausgangslaserstrahl für das erfindungsgemäße Verfahren bereit gestellt werden kann;
- Fig. 2: zeigt das Schweißbild einer Variante des erfindungsgemäßen Verfahrens mit vier Laserspots, wie sie durch die beispielhafte Schweißoptik aus Fig. 1a erzeugt werden kann;
- Fig. 3: zeigt einen schematischen Längsschnitt zweier Bauteile während des Verschweißens mit dem Schweißbild von Fig. 2, zur Erläuterung des erfindungsgemäßen Verfahrens;
- Fig. 4: zeigt einen schematischen Querschnitt der Dampfkapillare von Fig. 3 in den dortigen Ebenen A-A, B-B und C-C;
- Fig. 5a: zeigt das Schweißbild einer Variante des erfindungsgemäßen Verfahrens, in dem die Ringanteile von vier Laserspots teilweise einander überlappend angeordnet sind und sich in einem Mittelpunkt einander berühren;
- Fig. 5b: zeigt ein Schweißbild eines Verfahrens, in dem die Ringanteile von drei Laserspots teilweise einander überlappend angeordnet sind;
- Fig. 5c: zeigt ein Schweißbild einer Variante des erfindungsgemäßen Verfahrens, in dem die Ringanteile von fünf Laserspots teilweise einander überlappend angeordnet sind;
- Fig. 6a: zeigt eine schematische Aufsicht auf eine beispielhafte Facettenplatte wie sie in einer Schweißoptik verwendet werden kann zur Erzeugung mehrerer Teilstrahlen für das erfindungsgemäße Verfahren;
- Fig. 6b: zeigt einen schematischen Querschnitt der beispielhaften Facettenplatte aus Fig. 6a;
- Fig. 6c: zeigt ein Schweißbild einer Variante des erfindungsgemäßen Verfahrens mit sechs Laserspots in einer Ringformation und einem zentralen Laserspot, wie es durch die beispielhafte Facettenplatte aus Fig. 6a erzeugt werden kann;
- Fig. 7: zeigt ein experimentelles Bild eines Längsschliffs von zwei aluminiumhaltigen Bauteilen nach Durchführung des erfindungsgemäßen Verfahrens.

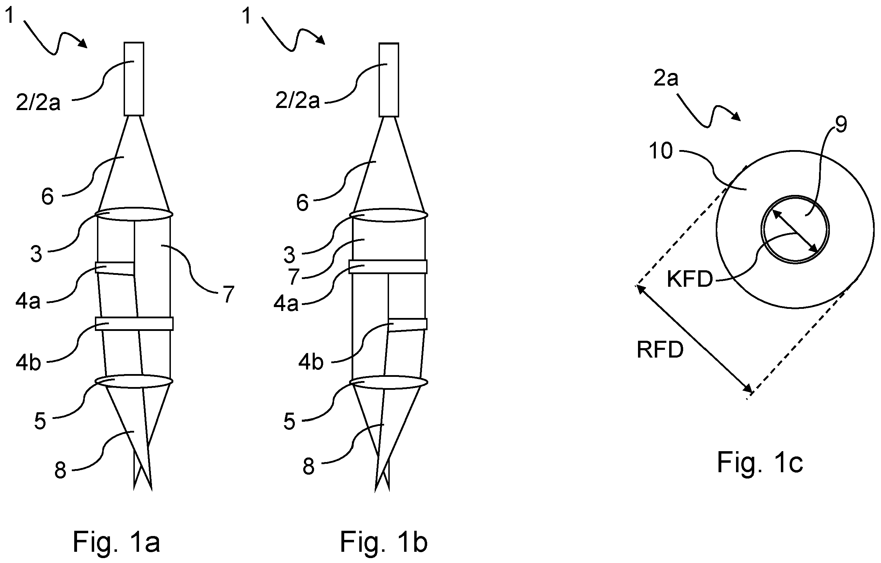

Die **Fig. 1a** zeigt in einer schematischen Seitenansicht eine beispielhafte Schweißoptik **1,** mit welcher das erfindungsgemäße Verfahren in einer bevorzugten Variante durchgeführt werden kann. Die **Fig. 1b** zeigt die Schweißoptik 1 aus Fig. 1a um 90° gedreht.

Die Schweißoptik 1 umfasst ein Laserlichtkabel **2,** welches als Multifaser, hier als 2-in-1-Faser **2a,** ausgebildet ist, eine Kollimationslinse **3,** zwei Bifokaleinsätze **4a, 4b,** welche hier als Glaskeile ausgebildet sind, und eine Fokussierlinse **5.** Die Bifokaleinsätze 4a, 4b sind hintereinander angeordnet und um 90° zueinander gedreht angeordnet.

Über das Laserlichtkabel 2 wird ein Ausgangslaserstrahl **6** bereitgestellt, der an einem Faserende des Laserlichtkabels 2 austritt. Das Faserende liegt im Fokus der Kollimationslinse 3, und der Ausgangslaserstrahl 6 wird von der Kollimationslinse 3 kollimiert, wodurch der Ausgangslaserstrahl 6 zu einem kollimierten Laserstrahl **7** wird. Der kollimierte Laserstrahl 7 wird zu den Bifokaleinsätzen 4a, 4b geführt. Die Bifokaleinsätze 4a, 4b nehmen hier jeweils etwa die Hälfte eines Querschnitts des kollimierten Laserstrahls 7 ein. Hierdurch kann der kollimierte Laserstrahl 7 in der hier gezeigten beispielhaften Schweißoptik 1 in vier Teilstrahlen **8** aufgeteilt werden. Die Teilstrahlen 8 werden durch die Fokussierlinse 5 auf eine Oberfläche eines zu verschweißenden Bauteils (nicht dargestellt) fokussiert, wodurch auf der Oberfläche des Bauteils ein Schweißbild aus hier vier gleich großen Laserspots erzeugt wird.

Als mittlere Laserleistung P des Ausgangslaserstrahls 6 kann beispielsweise P ≥ 2 kW, bevorzugt P ≥ 4 kW gewählt werden.

**Fig. 1c** zeigt beispielhaft einen Querschnitt der 2-in-1-Faser 2a, mit der der Ausgangslaserstrahl für das erfindungsgemäße Verfahren bereitgestellt werden kann.

Die 2-in-1-Faser 2a weist eine Kernfaser **9** mit einem Kernfaserdurchmesser **KFD** und eine Ringfaser **10** mit einem Ringfaserdurchmesser **RFD** auf. Typischerweise kann für den Kernfaserdurchmesser KFD beispielsweise 11 µm ≤ KFD ≤ 200 µm, bevorzugt 50 µm ≤ KFD ≤ 150 µm, gewählt werden und für den Ringfaserdurchmesser RFD beispielsweise 50 µm ≤ RFD ≤ 700 µm, bevorzugt 200 µm ≤ RFD ≤ 550 µm gewählt werden. Das Abbildungsverhältnis der Schweißoptik (vgl. Fig. 1a), die die 2-in-1-Faser umfasst, ist in der Ausführungsform 1:1 gewählt; in anderen Ausführungsformen kann beispielsweise auch ein Abbildungsverhältnis > 1:1 gewählt werden.

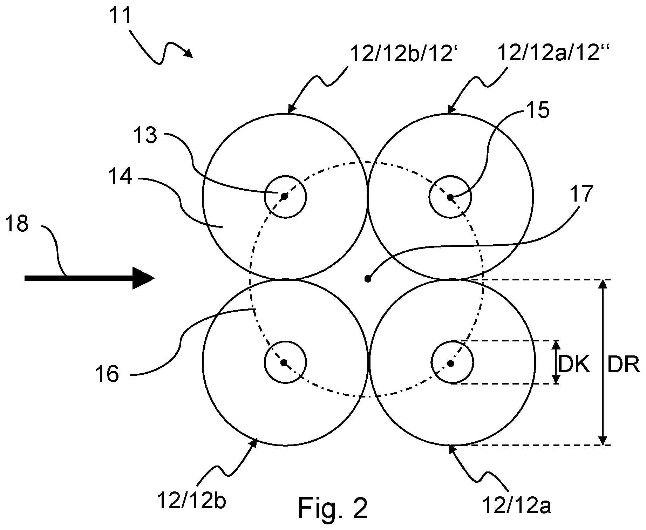

Mit der 2-in-1-Faser kann ein Laserstrahl erzeugt werden, der einen Kernanteil und einen Ringanteil aufweist (siehe hierzu z.B. Fig. 2 bezüglich der Laserspots) und als Ausgangslaserstrahl in der Schweißoptik dient (vgl. Fig. 1a). Hierzu wird ein Ursprungslaserstrahl (nicht näher gezeigt) teilweise in die Kernfaser 9 und teilweise in die Ringfaser 10 eingespeist, beispielsweise über einen teilweise in den Ursprungslaserstrahl eingeschobenen optischen Keil (nicht näher dargestellt).

In **Fig. 2** ist eine schematische Darstellung eines Schweißbildes **11** auf der Oberfläche eines zu verschweißenden Bauteils gezeigt, wie es durch die beispielhafte Schweißoptik aus Fig. 1a erzeugt werden kann.

Das Schweißbild 11 umfasst hier vier gleich große Laserspots **12.** Die vier Laserspots 12 weisen jeweils einen Kernanteil **13** und einen Ringanteil **14** auf, da der Ausgangslaserstrahl durch die 2-in-1-Faser erzeugt wird und dementsprechend bereits seinerseits einen Kernanteil und einen Ringanteil aufweist.

Jeder Laserspot 14 hat ein Laserspot-Zentrum **15.** Der Kernanteil 13 hat hier einen Durchmesser DK von 100 µm und der Ringanteil 14 hat hier einen Durchmesser DR von 400 µm. Das Verhältnis DR/DK ist dementsprechend 4.

Für einen Leistungsanteil LK des Kernanteils 13 eines einzelnen Laserspots 12 kann LK = 50% gewählt werden. In der hier gezeigten Variante weist der Ringanteil 14 eine ca. 15-fach größere Fläche auf als der Kernanteil 13. Eine mittlere Leistungsdichte im Kernanteil 13 ist dann hier etwa 15 mal größer als eine mittlere Leistungsdichte im Ringanteil 14.

Die Laserspots 12 sind in einer Ringformation **16** angeordnet; durch die Laserspot-Zentren 15 können die Eckpunkte eines Polygons (hier eines Quadrats) definiert werden, das eine Innenfläche einschließt. Der Abstand zwischen zwei Laserspot-Zentren 15 von nebeneinanderliegenden, in der Ringformation 16 benachbarten Laserspots 12 (z.B. der Laserspot-Zentren 15 der Laserspots 12' und 12") beträgt hier 400 µm. In der hier gezeigten Variante berühren sich die Ringanteile 14 der in der Ringformation 16 benachbarten Laserspots 12 genau. Der Abstand der Laserspot-Zentren 15 der in der Ringformation 16 benachbarten Laserspots 12 entspricht der Summe der jeweils halben Durchmesser DR der Ringanteile 14 der beteiligten Laserspots 12.

Das Schweißbild 11 weist hier eine vierzählige Rotationssymmetrie auf, da die Ringformation 16 durch vier Laserspots 12 ausgebildet wird, die durch Drehung um 90° um ein gemeinsames Zentrum (Schwerpunkt) **17** ineinander überführt werden können. Die Laserspot-Zentren 15 der Laserspots 12 der Ringformation 16 liegen hier auf einer Kreislinie (strichpunktiert dargestellt) um das gemeinsame Zentrum 17.

Bezüglich einer lokalen Vorschubrichtung **18** ist das Schweißbild 11 so angeordnet, dass zwei Laserspots **12a** vorauslaufen und zwei Laserspots **12b** nachlaufen.

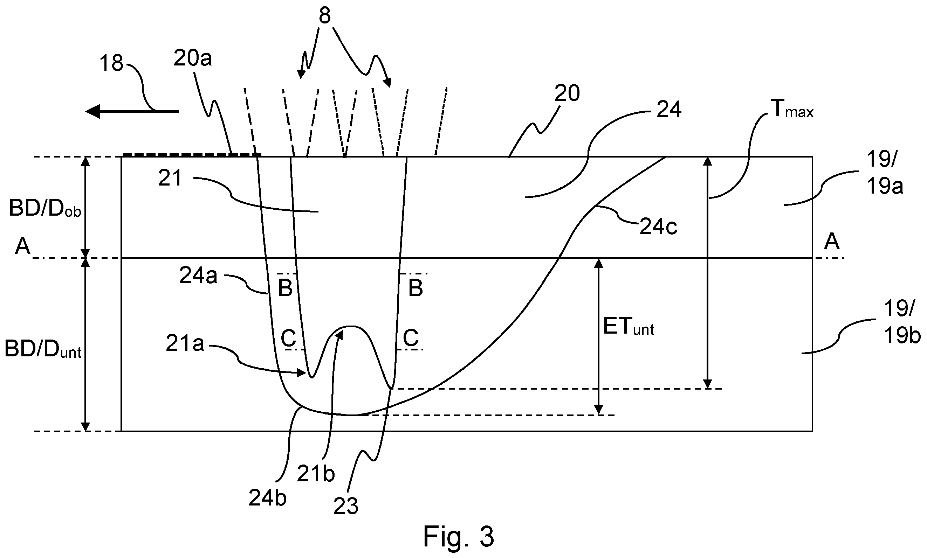

**Fig. 3** zeigt einen schematischen Längsschnitt zweier Bauteile **19** während des Verschweißens mit einem Schweißbild wie in Fig. 2 dargestellt, zur Erläuterung des erfindungsgemäßen Verfahrens in einer bevorzugten Variante. Bei der Fügesituation der zwei Bauteile 19 handelt es sich um einen Überlappstoß. Alternativ und hier nicht gezeigt kann es sich bei der Fügesituation der zwei Bauteile 19 auch um einen Stumpfstoß handeln.

Die Bauteile 19 sind aus einem Aluminiumwerkstoff gefertigt. Ein oberes Bauteil **19a** weist hier eine Bauteildicke **BD** bzw. Dicke **D_{ob}** von etwa 2 mm auf. Ein unterstes Bauteil **19b** weist hier eine Bauteildicke BD bzw. Dicke **Dᵤₙₜ** von etwa 3 mm auf. Das Verschweißen erfolgt hier als Einschweißen. Der Längsschnitt ist zentral durch zwei bezüglich der Vorschubrichtung 18 nebeneinander liegende Laserspots gewählt.

Die im Längsschnitt von Fig. 3 enthaltenen Teilstrahlen 8 werden von der Schweißoptik aus (nicht gezeigt) auf die Oberfläche **20** des oberen Bauteils 19a gerichtet. Die Teilstrahlen 8 dringen von der Oberfläche 20 aus in die Bauteile 19 ein und verdampfen in ihrer unmittelbaren Umgebung den Aluminiumwerkstoff. Es bildet sich durch die Wirkung aller Teilstrahlen 8 bzw. aller Laserspots eine gemeinsame Dampfkapillare **21** (auch gemeinsames Keyhole oder gemeinsame Metalldampfkapillare genannt), die bis in das unterstes Bauteil 19b reicht. Die gemeinsame Dampfkapillare 21 bildet in den Bauteilen 19 ein zusammenhängendes Volumen aus. In den Bereichen nahe der Kernanteile der Teilstrahlen 8 weist die gemeinsame Dampfkapillare 21 tiefer reichende Teilstücke **21a** ("Vorsprünge") aus. In einem Bereich zwischen den Teilstrahlen 8 weist die gemeinsame Dampfkapillare 21 ein weniger tief reichendes Teilstück **21b** auf ("Rücksprung"). Eine maximale Tiefe **Tₘₐₓ** der gemeinsamen Dampfkapillare 21 an einem untersten Punkt **23** beträgt hier ca. 4 mm.

Durch die Kombination der 2-in-1-Technik mit mehreren Laserspots, die durch die Teilstrahlen 8 erzeugt werden, ist die gemeinsame Dampfkapillare 21 besonders stabil.

In der Umgebung der gemeinsamen Dampfkapillare 21 wird der Aluminiumwerkstoff aufgeschmolzen, wodurch sich ein Schmelzbad **24** von flüssigem Aluminiumwerkstoff bildet. Da die Teilstrahlen 8 beim Verschweißen relativ zu den Bauteilen 19 in Vorschubrichtung 18 entlang einer Schweißkontur **20a** bewegt werden, in der hier gezeigten Darstellung nach links, ist das Schmelzbad 24 im Querschnitt nach rechts ausgesackt. An einer linken Kante **24a** und an einer unteren Kante **24b** des Schmelzbades 24 wird Aluminiumwerkstoff aufgeschmolzen, während an einer rechten Kante **24c** des Schmelzbades 24 Aluminiumwerkstoff wieder erstarrt.

Das Einschweißen in das unterste Bauteil 19b erfolgt bis in eine Einschweißtiefe ETᵤₙₜ, die im gezeigten Fall ca. 85% der Bauteildicke Dᵤₙₜ beträgt. Auf diese Weise kann eine gute und mediendichte Verschweißung erzielt werden.

Als Aluminiumwerkstoffe für die Bauteile 19 können Werkstoffe der 3000er, der 5000er oder der 6000er-Klasse gewählt werden. Als eine Schweißgeschwindigkeit SG kann SG≥5 m/min, bevorzugt SG≥10 m/min gewählt werden.

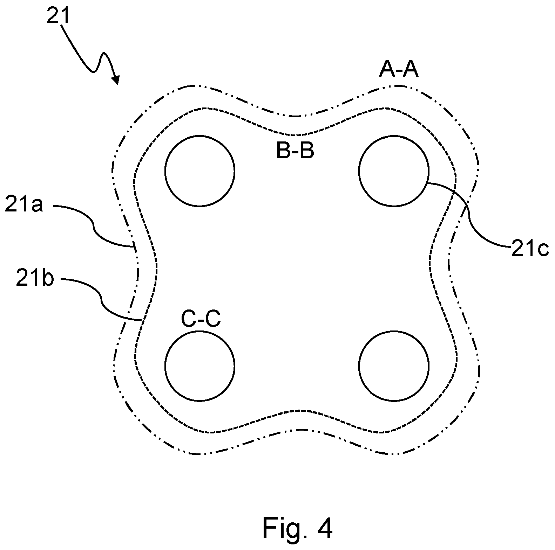

In **Fig. 4** sind schematische Querschnitte der Dampfkapillare 21 von Fig. 3 in den dortigen Ebenen A-A, B-B und C-C gezeigt.

Die strichpunktierte Linie zeigt einen Umriss **21a** der Dampfkapillare 21 in der Ebene A-A von Fig. 3, die in der Grenzfläche des oberen und unteren Bauteils liegt, also in einer Tiefe von ca. 2 mm. Die Dampfkapillare 21 bildet hier eine zusammenhängende Fläche aus.

Die gestrichelte Linie zeigt einen Umriss **21b** der Dampfkapillare 21 in der Ebene B-B von Fig. 3, die bei einer Tiefe entsprechend der Hälfte der maximalen Tiefe Tₘₐₓ der gemeinsamen Dampfkapillare entspricht, hier bei ca. 2,5 mm Tiefe. Die Dampfkapillare 21 bildet hier eine etwas kleinere, aber immer noch zusammenhängende Fläche aus.

Mit durchgehender Linie ist einen Umriss **21c** der Dampfkapillare 21 in etwa 3,8 mm Tiefe der Dampfkapillare 21 in der Ebene C-C von Fig. 3 gezeigt. Die Dampfkapillare bildet in dieser Tiefe im Querschnitt vier separate (nicht zusammenhängende) Teilbereiche aus, die jeweils näherungsweise kreisförmig ausgebildet sind. Die Ebene C-C schneidet die Dampfkapillare also nur noch im Bereich der lokalen Vorsprünge.

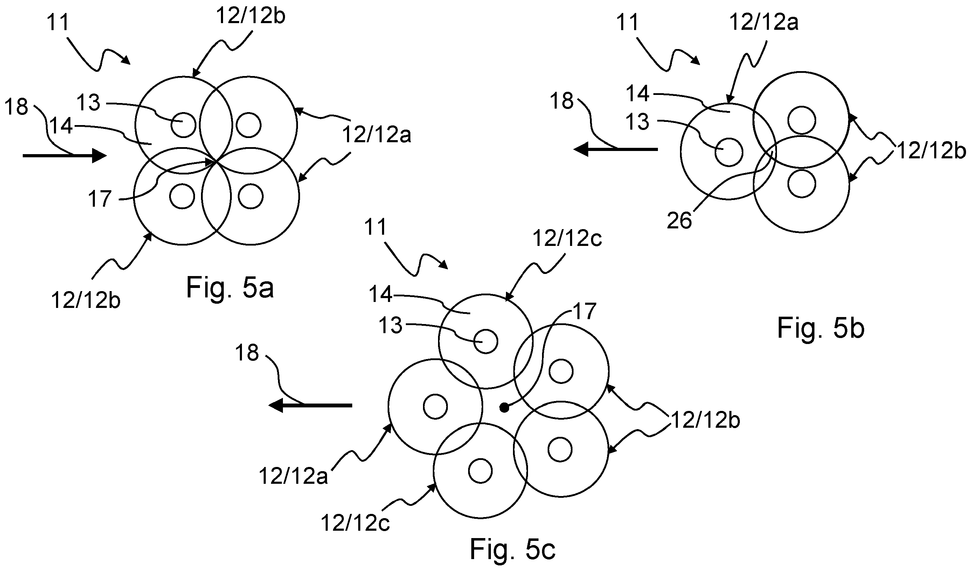

In **Fig. 5a** ist eine schematische Darstellung eines Schweißbildes 11 im Querschnitt gezeigt mit vier Laserspots 12 in Ringformation, für eine weitere Variante der Erfindung.

Die Laserspots 12 sind hier alle gleich groß. Der Kernanteil 13 hat hier einen Durchmesser DK von 100 µm und der Ringanteil 14 hat hier einen Durchmesser DR von 400 µm. Das Verhältnis DR/DK ist dementsprechend 4.

Der Abstand zwischen zwei (diagonal) gegenüberliegenden Laserspot-Zentren der Laserspots 12 beträgt hier 400 µm. In der hier gezeigten Variante berühren sich die Ringanteile 14 der gegenüberliegenden Laserspots 12 genau im gemeinsamen Zentrum 17. Die benachbarten Laserspots 12 sind einander überlappend angeordnet. Die Kernanteile 13 überlappen jeweils nicht. Das Schweißbild 11 weist hier eine vierzählige Rotationssymmetrie auf, da die Ringformation durch vier Laserspots 12 ausgebildet wird, die durch Drehung um 90° um das gemeinsame Zentrum 17 ineinander überführt werden können.

Bezüglich der eingezeichneten lokalen Vorschubrichtung 18 ist das Schweißbild 11 so angeordnet, dass die zwei Laserspots 12a vorauslaufen und die zwei Laserspots 12b nachlaufen. Die beiden Laserspots 12a befinden sich bezüglich der lokalen Vorschubrichtung 18 an identischen Positionen. Ebenso befinden sich die beiden Laserspots 12b bezüglich der lokalen Vorschubrichtung 18 an identischen Positionen.

In **Fig. 5b** ist eine schematische Darstellung eines Schweißbildes 11 im Querschnitt gezeigt mit drei Laserspots 12 in Ringformation (nicht Gegenstand der beanspruchten Erfindung).

Die Laserspots 12 sind hier alle gleich groß. Der Kernanteil 13 hat hier einen Durchmesser DK von 300 µm und der Ringanteil 14 hat hier einen Durchmesser DR von 800 µm. Das Verhältnis DR/DK ist dementsprechend 2,67.

Die benachbarten Laserspots 12 sind bezüglich der Ringanteile 14 einander überlappend angeordnet und in einem Zentralbereich **26** überlappen sich alle drei Laserspots 12 in den Ringanteilen 14. Die Kernanteile 13 überlappen jeweils nicht.

Bezüglich der gezeigten lokalen Vorschubrichtung 18 ist das Schweißbild 11 so angeordnet, dass ein Laserspot 12a vorausläuft und zwei Laserspots 12b nachlaufen. Die beiden Laserspots 12b befinden sich bezüglich der lokalen Vorschubrichtung 18 an identischen Positionen. Die Laserspots 12b sind hier zueinander etwas geringer beabstandet als der vorauslaufende Laserspot 12a zu jedem der nachlaufenden Laserspots 12b (jeweils bezogen auf die Laserspot-Zentren).

In **Fig. 5c** ist eine schematische Darstellung eines Schweißbildes 11 im Querschnitt gezeigt mit fünf Laserspots 12 in Ringformation, in einer weiteren Variante der Erfindung.

Die Laserspots 12 sind hier alle gleich groß. Der Kernanteil 13 hat hier einen Durchmesser DK von 100 µm und der Ringanteil 14 hat hier einen Durchmesser DR von 400 µm. Das Verhältnis DR/DK ist dementsprechend 4.

Der Abstand zwischen zwei in der Ringformation benachbarten Laserspot-Zentren 15 der Laserspots 12 beträgt hier ungefähr 350 µm. In der hier gezeigten Variante sind die in der Ringformation benachbarten Laserspots 12 mit den Ringanteilen 14 einander überlappend angeordnet. Das Schweißbild 11 weist hier eine fünfzählige Rotationssymmetrie auf, da die Ringformation durch fünf Laserspots 12 ausgebildet wird, die durch Drehung um 72° um das gemeinsame Zentrum 17 ineinander überführt werden können.

Bezüglich der gezeigten lokalen Vorschubrichtung 18 ist das Schweißbild 11 so angeordnet, dass ein Laserspot 12a vorausläuft, zwei Laserspots 12b nachlaufen, und zwei Laserspots **12c** mittig zwischen den Laserspots 12a, 12b angeordnet sind. Die beiden nachlaufenden Laserspots 12b befinden sich bezüglich der lokalen Vorschubrichtung 18 an identischen Positionen. Ebenso befinden sich die beiden mittleren Laserspots 12c bezüglich der lokalen Vorschubrichtung 18 an identischen Positionen.

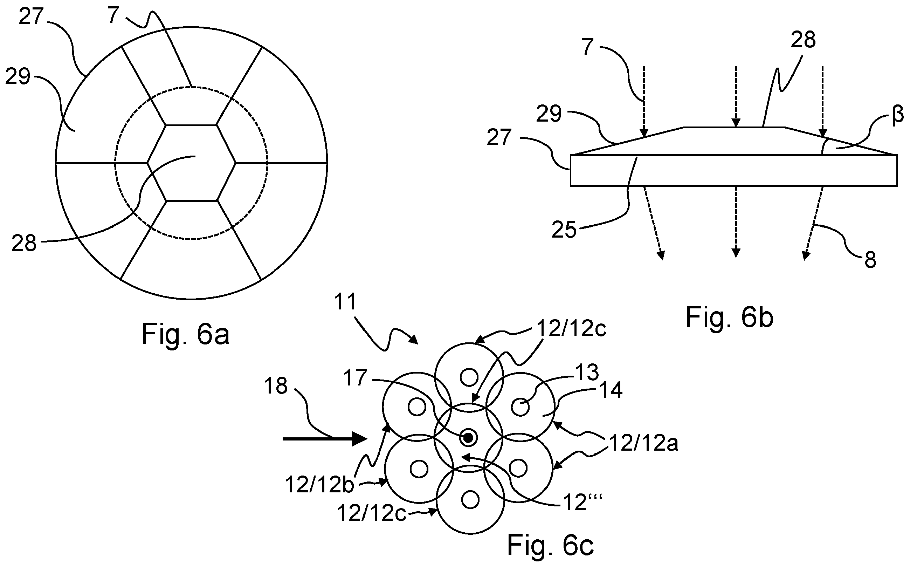

**Fig. 6a** zeigt eine schematische Aufsicht auf eine beispielhafte Facettenplatte **27,** wie sie in einer Schweißoptik verwendet werden kann, zur Erzeugung mehrerer Teilstrahlen für das erfindungsgemäße Verfahren.

Die Facettenplatte 27 umfasst in der hier gezeigten Form eine regelmäßig sechseckige zentrale Facette **28** ("Zentralfacette"). Die Facettenplatte 27 umfasst und dieser herum angeordnet sechs äußere Facetten **29** ("Außenfacetten"). Auf die Facettenplatte 27 wird der kollimierte Laserstrahl 7 eingestrahlt.

**Fig. 6b** zeigt einen schematischen Querschnitt der beispielhaften Facettenplatte 27 aus Fig. 6a.

Die äußeren Facetten 29 sind keilförmig ausgebildet. Ein Facettenwinkel β beträgt hier etwa 0,15°, gemessen gegenüber einer Grundebene 25, die senkrecht zur Einstrahlrichtung des kollimierten Laserstrahls 7 liegt. Der kollimierte Laserstrahl 7 wird auf die Facettenplatte 27 eingestrahlt. Im Bereich der zentralen Facette 28 erfolgt keine Ablenkung des kollimierten Laserstrahls 7. In den Bereichen der sechs äußeren Facetten 29 wird der kollimierte Laserstrahl 7 abgelenkt (gebrochen). Somit ergeben sich ein unabgelenkter Teilstrahl 8 und sechs abgelenkte Teilstrahlen 8.

**Fig. 6c** zeigt ein Schweißbild 11 einer Variante des erfindungsgemäßen Verfahrens mit sechs Laserspots 12 in einer Ringformation und einem zentralen Laserspot 12, wie sie durch die beispielhafte Facettenplatte 27 aus Fig. 6a erzeugt werden kann. Der zentrale Laserspot 12 wird hier auch mit 12‴ bezeichnet.

Die Laserspots 12 sind hier alle gleich groß. Der Kernanteil 13 hat hier einen Durchmesser DK von 100 µm und der Ringanteil 14 hat hier einen Durchmesser DR von 400 µm. Das Verhältnis DR/DK ist dementsprechend 4.

Der Abstand zwischen zwei in der Ringformation benachbarten Laserspot-Zentren 15 der Laserspots 12 beträgt hier ungefähr 350 µm. In der hier gezeigten Variante sind die in der Ringformation benachbarten Laserspots 12 mit den Ringanteilen 14 einander überlappend angeordnet. Der zentrale Laserspot 12‴ ist mit allen anderen Laserspots 12 bezüglich der Ringanteile 14 überlappend angeordnet. Die Kernanteile 13 überlappen jeweils nicht. Das Schweißbild 11 weist hier eine sechszählige Rotationssymmetrie auf, da die Ringformation durch sechs Laserspots 12 ausgebildet wird, die durch Drehung um 60° um das gemeinsame Zentrum 17 ineinander überführt werden können; der zentrale Laserspot 12‴ bleibt von der Rotation unberührt, da sein Laserspot-Zentrum mit dem gemeinsamen Zentrum 17 zusammenfällt.

Bezüglich der lokalen Vorschubrichtung 18 ist das Schweißbild 11 so angeordnet, dass die zwei Laserspots 12a vorauslaufen, die zwei Laserspots 12b nachlaufen, und die drei Laserspots 12c mittig zwischen den Laserspots 12a, 12b angeordnet sind.

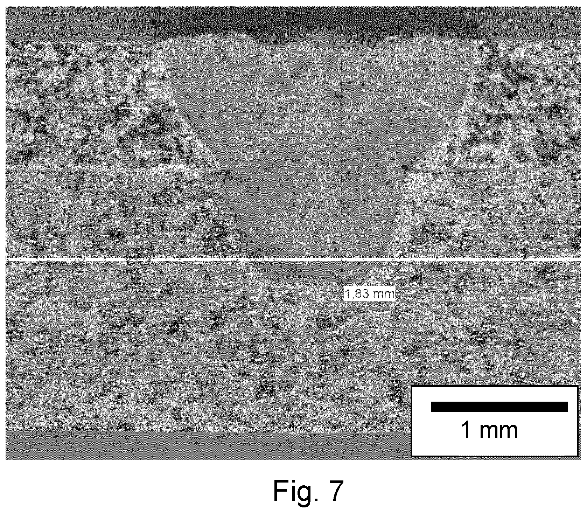

**Fig. 7** zeigt ein experimentelles Bild von zwei aluminiumhaltigen Bauteilen, die bei Durchführung einer Variante des erfindungsgemäßen Verfahrens im Überlappstoß miteinander verschweißt wurden. Es wurde ein Querschliff gefertigt und im Lichtmikroskop fotografiert.

Das obere Bauteil hat eine Bauteildicke von ca. 1 mm, und das untere Bauteil hat eine Bauteildicke von ca. 2 mm. Die Verschweißung erfolgte durch Einschweißen zu ca. 40% in das untere Bauteil; die Schweißrichtung war senkrecht zur Zeichenebene. Es wurde eine praktisch porenfreie, mediendichte Schweißnaht erhalten.

Im vorliegenden Beispiel wurde das Schweißbild von Fig. 2 (siehe oben) angewandt, mit vier Laserspots in quadratischer, einander berührender Anordnung. Es wurde eine (gesamte) mittlere Laserleistung P = 3 kW und eine Schweißgeschwindigkeit SG = 5m/min gewählt. Der Leistungsanteil im Kern betrug 70%, der Kerndurchmesser DK war 100 µm, und der Ringdurchmesser DR war 400 µm für jeden Laserspot. Die aluminiumhaltigen Bauteile waren aus der Aluminiumlegierung AW-5083 gefertigt.

### Bezugszeichenliste

- 1: Schweißoptik
- 2: Laserlichtkabel
- 2a: 2-1-Faser
- 3: Kollimationslinse
- 4a, 4b: Bifokaleinsätze
- 5: Fokussierlinse
- 6: Ausgangslaserstrahl
- 7: kollimierter Laserstrahl
- 8: Teilstrahl
- 9: Kernfaser
- 10: Ringfaser
- 11: Schweißbild
- 12: Laserspot
- 12': Laserspot benachbart zu Laserspot 12"
- 12": Laserspot benachbart zu Laserspot 12'
- 12‴: zentraler Laserspot
- 12a: vorlaufender Laserspot
- 12b: nachlaufender Laserspot
- 12c: mittiger Laserspot
- 13: Kernanteil
- 14: Ringanteil
- 15: Laserspot-Zentrum
- 16: Ringformation
- 17: gemeinsames Zentrum
- 18: Vorschubrichtung
- 19: Bauteil
- 19a: oberes Bauteil
- 19b: unterstes Bauteil
- 20: Oberfläche
- 20a: Schweißkontur
- 21: Dampfkapillare
- 21a: Vorsprung
- 21b: Rücksprung
- 23: unterster Punkt
- 24: Schmelzbad
- 24a: linke Kante
- 24b: untere Kante
- 24c: rechte Kante
- 25: Grundebene
- 26: Zentralbereich
- 27: Facettenplatte
- 28: zentrale Facette
- 29: äußere Facetten

- β: Facettenwinkel
- BD: Bauteildicke
- DK: Durchmesser Kernanteil
- D_{ob}: Bauteildicke oberes Bauteil
- DR: Durchmesser Ringanteil
- Dᵤₙₜ: Bauteildicke unterstes Bauteil
- ETᵤₙₜ: Einschweißtiefe in das unterste Bauteil
- KFD: Kernfaserdurchmesser
- RFD: Ringfaserdurchmesser
- Tₘₐₓ: maximale Tiefe der Dampfkapillare

## Patentansprüche

1. Verfahren zum Verschweißen von wenigstens zwei aluminiumhaltigen Bauteilen (19),
wobei die Bauteile (19) jeweils einen Gehalt von wenigstens 75 Gew% Aluminium, bevorzugt wenigstens 90 Gew% Aluminium, aufweisen,
wobei das Verschweißen als Einschweißen durch Laserschweißen im Tiefschweißregime erfolgt,
wobei ein Ausgangslaserstrahl (6) auf mehrere Teilstrahlen (8) aufgeteilt wird, die auf die Bauteile (19) gerichtet werden, so dass an einer Oberfläche (20) der Bauteile (19) mehrere Laserspots (12) erzeugt werden,
wobei die mehreren Laserspots (12) an der Oberfläche (20) der Bauteile (19) eine Schweißkontur (20a) abfahren,
wobei Laserspot-Zentren (15) von wenigstens vier Laserspots (12) der mehreren Laserspots (12) in einer Ringformation (16) angeordnet sind,
**dadurch gekennzeichnet, dass**
der Ausgangslaserstrahl (6) mittels einer Multifaser, bevorzugt einer 2-in-1-Faser (2a), erzeugt wird, so dass die mehreren Laserspots (12) an der Oberfläche (20) der Bauteile (19) jeweils einen Kernanteil (13) und einen Ringanteil (14) aufweisen, wobei eine mittlere Leistungsdichte im Kernanteil (14) höher ist als eine mittlere Leistungsdichte im Ringanteil (13), und
wobei sich eine gemeinsame Dampfkapillare (21) aller Laserspots (12) in den Bauteilen (19) ausbildet, die von einem gemeinsamen Schmelzbad (24) umgeben ist.

2. Verfahren nach Anspruch 1, **dadurch gekennzeichnet,**
**dass** das Laserschweißen erfolgt
- als Einschweißen im Überlappstoß, insbesondere wobei das Einschweißen in wenigstens 10% einer Bauteildicke (Dᵤₙₜ) eines untersten Bauteils (19b) des Überlappstoßes erfolgt, oder
- als Einschweißen im Stumpfstoß.

3. Verfahren nach einem der vorhergehenden Ansprüche, **dadurch gekennzeichnet, dass** die mehreren Laserspots (12) eine Anordnung bilden, die eine Rotationssymmetrie mit einer Zähligkeit entsprechend der Anzahl der Laserspots (12) der Ringformation (16) hat.

4. Verfahren nach einem der Ansprüche 1 bis 3, **dadurch gekennzeichnet, dass** die Ringformation (16) von genau vier Laserspots (12) gebildet wird.

5. Verfahren nach Anspruch 4, **dadurch gekennzeichnet, dass** die Schweißkontur (20a) so verläuft, dass während des Laserschweißens zumindest überwiegend bezüglich der lokalen Vorschubrichtung (18)
- zwei Laserspots (12a) der Ringformation (16) mit gleicher Position bezüglich der lokalen Vorschubrichtung (18) vorauslaufen,
- und zwei Laserspots (12b) der Ringformation (16) mit gleicher Position bezüglich der lokalen Vorschubrichtung (18) nachlaufen.

6. Verfahren nach einem der Ansprüche 1 bis 3, **dadurch gekennzeichnet, dass** die Ringformation (16) von genau fünf Laserspots (12) gebildet wird, insbesondere wobei die Schweißkontur (20a) so verläuft, dass während des Laserschweißens zumindest überwiegend bezüglich der lokalen Vorschubrichtung (18)
- ein Laserspot (12a) der Ringformation (16) vorausläuft,
- zwei Laserspots (12c) der Ringformation (16) mittig mit gleicher Position bezüglich der lokalen Vorschubrichtung (18) angeordnet sind,
- und zwei Laserspots (12b) der Ringformation (16) mit gleicher Position bezüglich der lokalen Vorschubrichtung (18) nachlaufen.

7. Verfahren nach einem der Ansprüche 1 bis 6 **dadurch gekennzeichnet, dass** die Ringanteile (14) von in der Ringformation (16) benachbarten Laserspots (12) einander berührend angeordnet sind.

8. Verfahren nach einem der Ansprüche 1 bis 6, **dadurch gekennzeichnet, dass** die Ringanteile (14) von in der Ringformation (16) benachbarten Laserspots (12) einander überlappend angeordnet sind,
insbesondere wobei die Kernanteile (13) von Laserspots (12) der Ringformation (16) nicht mit den Ringanteilen (14) von in der Ringformation (16) benachbarten Laserspots (12) überlappen.

9. Verfahren nach Anspruch 8, **dadurch gekennzeichnet, dass** in jedem Ort maximal zwei Ringanteile (14) von Laserspots (12) der Ringformation (16) miteinander überlappen.

10. Verfahren nach Anspruch 8 oder 9, **dadurch gekennzeichnet, dass** die Laserspots (12) der Ringformation (16) ein gemeinsames Zentrum (17) umfassen, an welchem sich die Ringanteile (14) der Laserspots (12) der Ringformation (16) einander berühren,
insbesondere wobei genau vier Laserspots (12) in der Ringformation (16) angeordnet sind.

11. Verfahren nach Anspruch 9, **dadurch gekennzeichnet, dass** in einem Zentralbereich (26) die Ringanteile (14) aller Laserspots (12) der Ringformation (16) einander überlappen.

12. Verfahren nach einem der vorhergehenden Ansprüche, **dadurch gekennzeichnet,**
**dass** für einen Durchmesser DK des Kernanteils (13) und einen Durchmesser DR des Ringanteils (14) gilt: 2≤DR/DK≤10, bevorzugt 2,5≤DR/DK≤6, besonders bevorzugt 3,5≤DR/DK≤5,
und **dass** für einen Leistungsanteil LK des Kernanteils (13) im Verhältnis zur Gesamtleistung in einem jeweiligen Laserspot (12) gilt: 10%≤LK≤90%, bevorzugt 30%≤LK≤70%, besonders bevorzugt 40%≤LK≤60%.

13. Verfahren nach einem der vorhergehenden Ansprüche, **dadurch gekennzeichnet, dass**
- die Bauteile (19) eine Bauteildicke BD mit 0,5mm≤BD≤5,0 mm aufweisen, und/oder
- die Bauteile (19) aus Aluminiumwerkstoffen der 3000er, 5000er oder 6000er-Klasse gefertigt sind, und/oder
- die Kernanteile (13) der Laserspots (12) einen Durchmesser DK aufweisen mit 11µm≤DK≤200µm, bevorzugt 50µm≤DK≤150µm, und die Ringanteile (14) der Laserspots (12) einen Durchmesser DR aufweisen mit 50µm≤DR≤700µm, bevorzugt 200µm≤DR≤550µm, und/oder
- eine mittlere Laserleistung P des Ausgangslaserstrahl (6) angewandt wird mit P≥2kW, bevorzugt P≥4kW, und/oder
- eine Schweißgeschwindigkeit SG angewandt wird mit SG≥5m/min, bevorzugt SG≥10m/min.

## Claims

1. A method for welding at least two aluminum-containing components (19),
wherein the components (19) each have an aluminum content of at least 75% by weight, preferably at least 90% by weight, wherein the welding takes place as a welding-in, by laser welding, in the deep penetration welding regime,
wherein an output laser beam (6) is subdivided into a plurality of partial beams (8) directed onto the components (19) so that a plurality of laser spots (12) are generated on a surface (20) of the components (19), wherein the plurality of laser spots (12) traverse a welding contour (20a) on the surface (20) of the components (19),
wherein laser spot centers (15) of at least four laser spots (12) of the plurality of laser spots (12) are arranged in a ring formation (16),
**characterized in that**
the output laser beam (6) is generated by means of a multi-fiber, preferably a 2-in-1 fiber (2a), such that each of the plurality of laser spots (12) on the surface (20) of the components (19) has a core portion (13) and a ring portion (14), wherein a mean power density in the core portion (14) is greater than a mean power density in the ring portion (13), and
wherein a common vapor capillary (21) for all laser spots (12) is formed in the components (19), said capillary being surrounded by a common melt pool (24).

2. The method according to claim 1, **characterized in that**
the laser welding takes place
- as a welding-in in the lap joint, in particular where the welding-in takes place in at least 10% of a component thickness (Dᵤₙₜ) of a lowermost component (19b) of the lap joint, or
- as a welding-in in the butt joint.

3. The method according to any one of the preceding claims, **characterized in that** the plurality of laser spots (12) form an arrangement that has a rotational symmetry with an order corresponding to the number of laser spots (12) of the ring formation (16).

4. The method according to any one of claims 1 to 3, **characterized in that** the ring formation (16) is formed by precisely four laser spots (12).

5. The method according to claim 4, **characterized in that** the welding contour (20a) extends such that, during the laser welding and at least predominantly with respect to a local direction of advancement (18)
- two laser spots (12a) of the ring formation (16) are leading laser spots with the same position with respect to the local direction of advancement (18),
- and two other laser spots (12b) of the ring formation (16) are trailing laser spots with the same position with respect to the local direction of advancement (18).

6. The method according to any one of claims 1 to 3, **characterized in that** the ring formation (16) is formed by precisely five laser spots (12), in particular wherein the welding contour (20a) extends such that, during the laser welding and at least predominantly with respect to a local direction of advancement (18)
- one laser spot (12a) of the ring formation (16) is a leading laser spot,
- two laser spots (12c) of the ring formation (16) are arranged in a middle with the same position with respect to the local direction of advancement (18),
- and two laser spots (12b) of the ring formation (16) are trailing laser spots with the same position with respect to the local direction of advancement (18).

7. The method according to any one of claims 1 to 6, **characterized in that** the ring portions (14) of laser spots (12) that are arranged adjacent in the ring formation (16) are arranged such that they touch one another.

8. The method according to any one of claims 1 to 6, **characterized in that** the ring portions (14) of laser spots (12) that are arranged adjacent in the ring formation (16) are arranged such that they overlap one another,
in particular wherein the core portions (13) of laser spots (12) of the ring formation (16) are not overlapping with the ring portions (14) of laser spots (12) that are adjacent in the ring formation (16).

9. The method according to claim 8, **characterized in that** at any location, at most two ring portions (14) of laser spots (12) of the ring formation (16) overlap with one another.

10. The method according to claim 8 or 9, **characterized in that** the laser spots (12) of the ring formation (16) enclose a common center (17) at which the ring portions (14) of the laser spots (12) of the ring formation (16) touch one another,
in particular wherein precisely four laser spots (12) are arranged in the ring formation (16).

11. The method according to claim 9, **characterized in that** in a central region (26), the ring portions (14) of all the laser spots (12) of the ring formation (16) overlap one another.

12. The method according to any one of the preceding claims, **characterized in that**, for a diameter DK of the core portion (13) and a diameter DR of the ring portion (14), it holds true that: 2≤DR/DK≤10, preferably 2.5≤DR/DK≤6, particularly preferably 3.5≤DR/DK≤5,
and that for a power proportion LK of the core portion (13) in relation to the overall power in a respective laser spot (12), the following holds true:
10%≤LK≤90%, preferably 30%≤LK≤70%, particularly preferably 40%≤LK≤60%.

13. The method according to any one of the preceding claims, **characterized in that**
- the components (19) have a component thickness BD of 0.5 mm≤BD≤5.0 mm, and/or
- the components (19) are made from aluminum materials of class 3000, 5000 or 6000, and/or
- the core portions (13) of the laser spots (12) have a diameter DK of 11 µm≤DK≤200µm, preferably 50µm≤DK≤150µm, and the ring portions (14) of the laser spots (12) have a diameter DR of 50µm≤DR≤700µm, preferably 200µm≤DR≤550µm and/or
- a mean laser power P of the output laser beam (6) is applied, at P≥2kW, preferably P≥4kW, and/or
- a welding speed SG is applied, at SG≥5 m/min preferably SG≥10m/min.

## Revendications

1. Procédé de soudage d'au moins deux pièces (19) contenant de l'aluminium,
dans lequel les pièces (19) présentent chacune une teneur d'au moins 75 % en poids d'aluminium, de préférence d'au moins 90 % en poids d'aluminium, dans lequel le soudage est réalisé sous forme de soudage en pénétration au moyen d'un soudage laser en régime de soudage en pénétration profonde,
dans lequel un faisceau laser initial (6) est divisé en plusieurs faisceaux partiels (8), qui sont dirigés vers les pièces (19), de sorte que plusieurs points laser (12) sont générés sur une surface (20) des pièces (19), dans lequel lesdits plusieurs points laser (12) parcourent un contour de soudure (20a) sur la surface (20) des pièces (19),
dans lequel des centres de points laser (15) d'au moins quatre points laser (12) desdits plusieurs points laser (12) sont disposés dans une formation annulaire (16),
**caractérisé en ce que**
le faisceau laser initial (6) est généré au moyen d'une fibre multifaisceau, de préférence une fibre 2-en-1 (2a), de sorte que lesdits plusieurs points laser (12) présentent chacun sur la surface (20) des pièces (19) un composant de cœur (13) et un composant annulaire (14), dans lequel une densité de puissance moyenne dans le composant de cœur (14) est supérieure à une densité de puissance moyenne dans le composant annulaire (13), et
dans lequel une cavité de vapeur (21) commune de tous les points laser (12) se forme dans les pièces (19), laquelle est entourée par un bain de fusion (24) commun.

2. Procédé selon la revendication 1, **caractérisé en ce que**
le soudage laser est réalisé
- sous forme de soudage en pénétration dans un joint à recouvrement, en particulier dans lequel le soudage en pénétration est réalisé sur au moins 10 % d'une épaisseur de pièce (Dᵤₙₜ) d'une pièce (19b) inférieure du joint à recouvrement, ou
- sous forme de soudage en pénétration dans un joint bout à bout.

3. Procédé selon l'une quelconque des revendications précédentes, **caractérisé en ce que** lesdits plusieurs points laser (12) forment une disposition présentant une symétrie de rotation avec un ordre correspondant au nombre de points laser (12) de la formation annulaire (16).

4. Procédé selon l'une quelconque des revendications 1 à 3, **caractérisé en ce que** la formation annulaire (16) est formée par exactement quatre points laser (12).

5. Procédé selon la revendication 4, **caractérisé en ce que** le contour de soudure (20a) est tel que, pendant le soudage laser, au moins majoritairement par rapport à la direction d'avance (18) locale
- deux points laser (12a) de la formation annulaire (16) précèdent avec une position identique par rapport à la direction d'avance (18) locale,
- et deux points laser (12b) de la formation annulaire (16) suivent avec une position identique par rapport à la direction d'avance (18) locale.

6. Procédé selon l'une quelconque des revendications 1 à 3, **caractérisé en ce que** la formation annulaire (16) est formée par exactement cinq points laser (12), en particulier dans lequel le contour de soudure (20a) est tel que, pendant le soudage laser, au moins majoritairement par rapport à la direction d'avance (18) locale
- un point laser (12a) de la formation annulaire (16) précède,
- deux points laser (12c) de la formation annulaire (16) sont disposés au centre avec une position identique par rapport à la direction d'avance (18) locale,
- et deux points laser (12b) de la formation annulaire (16) suivent avec une position identique par rapport à la direction d'avance (18) locale.

7. Procédé selon l'une quelconque des revendications 1 à 6, **caractérisé en ce que** les composants annulaires (14) de points laser (12) adjacents dans la formation annulaire (16) sont disposés de manière à se toucher.

8. Procédé selon l'une quelconque des revendications 1 à 6, **caractérisé en ce que** les composants annulaires (14) de points laser (12) adjacents dans la formation annulaire (16) sont disposés de manière à se chevaucher,
en particulier dans lequel les composants de cœur (13) des points laser (12) de la formation annulaire (16) ne se chevauchent pas avec les composants annulaires (14) des points laser (12) adjacents dans la formation annulaire (16).

9. Procédé selon la revendication 8, **caractérisé en ce qu'**en chaque emplacement au maximum deux composants annulaires (14) de points laser (12) de la formation annulaire (16) se chevauchent entre eux.

10. Procédé selon la revendication 8 ou 9, **caractérisé en ce que** les points laser (12) de la formation annulaire (16) comprennent un centre (17) commun, au niveau duquel les composants annulaires (14) des points laser (12) de la formation annulaire (16) se touchent,
en particulier dans lequel exactement quatre points laser (12) sont disposés dans la formation annulaire (16).

11. Procédé selon la revendication 9, **caractérisé en ce que** dans une zone centrale (26) les composants annulaires (14) de tous les points laser (12) de la formation annulaire (16) se chevauchent entre eux.

12. Procédé selon l'une quelconque des revendications précédentes, **caractérisé en ce que**
pour un diamètre DK du composant de cœur (13) et un diamètre DR du composant annulaire (14), on a : 2 ≤ DR / DK ≤ 10, de préférence 2,5 ≤ DR / DK ≤ 6, particulièrement de préférence 3,5 ≤ DR / DK ≤ 5,
et **en ce que** pour une fraction de puissance LK du composant de cœur (13) par rapport à la puissance totale dans un point laser (12) respectif, on a :
10 % ≤ LK ≤ 90 %, de préférence 30 % ≤ LK ≤ 70 %, particulièrement de préférence 40 % ≤ LK ≤ 60 %.

13. Procédé selon l'une quelconque des revendications précédentes, **caractérisé en ce que**
- les pièces (19) présentent une épaisseur de pièce BD avec 0,5 mm ≤ BD ≤ 5,0 mm, et/ou
- les pièces (19) sont fabriquées en matériaux en aluminium des séries 3000, 5000 ou 6000, et/ou
- les composants de cœur (13) des points laser (12) présentent un diamètre DK avec 11 µm ≤ DK ≤ 200 µm, de préférence 50 µm ≤ DK ≤ 150 µm, et les composants annulaires (14) des points laser (12) présentent un diamètre DR avec 50 µm ≤ DR ≤ 700 µm, de préférence 200 µm ≤ DR ≤ 550 µm, et/ou
- une puissance laser moyenne P du faisceau laser initial (6) est appliquée avec P ≥ 2 kW, de préférence P ≥ 4 kW, et/ou
- une vitesse de soudage SG est appliquée avec SG ≥ 5 m/min, de préférence SG ≥ 10 m/min.
